Europäisches Patentamt

European Patent Office

Office européen des brevets

(19)

(11) EP 0 591 138 B1

(12) FASCICULE DE BREVET EUROPEEN

(45) Date de publication et mention
de la délivrance du brevet:
**29.01.1997 Bulletin 1997/05**

(21) Numéro de dépôt: 90912535.3

(22) Date de dépôt: 26.07.1990

(51) Int Cl.6: **G06K 7/10**, G07C 15/00

(86) Numéro de dépôt international:
**PCT/FR90/00569**

**WO 91/02328 (21.02.1991 Gazette 1991/05)**

(54) **SYSTEME DE TRANSMISSION D'INFORMATIONS, OBJET PORTATIF ET LECTEUR UTILISABLES DANS UN TEL SYSTEME**

SYSTEM ZUR ÜBERTRAGUNG VON INFORMATIONEN UND TRAGBARES OBJEKT UND LESEGERÄT ZUM GEBRAUCH IN EINEM SOLCHEN SYSTEM

DATA TRANSMISSION SYSTEM, PORTABLE OBJECT AND READER USABLE IN SUCH A SYSTEM

(84) Etats contractants désignés:
**AT BE CH DE DK ES FR GB IT LI LU NL SE**

(30) Priorité: **28.07.1989 FR 8910201**

(43) Date de publication de la demande:
**13.04.1994 Bulletin 1994/15**

(73) Titulaire: **ACTIVCARD**
**92138 Issy-les-Moulineaux Cedex (FR)**

(72) Inventeurs:
• AUDEBERT, Yves
**F-78290 Croissy-sur-Seine (FR)**
• DELAHAYE, Achille
**F-94430 Chennevières-sur-Marne (FR)**

(74) Mandataire: **Colas, Jean-Pierre et al**
**Cabinet de Boisse**
**37, avenue Franklin D. Roosevelt**
**75008 Paris (FR)**

(56) Documents cités:
EP-A- 0 056 064     EP-A- 0 168 836
DE-A- 3 047 322     FR-A- 2 436 448
FR-A- 2 478 849     US-A- 4 088 265
US-A- 4 528 445     US-A- 4 783 598

## Description

La présente invention est relative à un système de transmission d'informations et, plus particulièrement, à un tel système conçu pour transmettre des informations entre un objet portatif et des moyens de traitement d'informations élaborées dans l'objet portatif.

On utilise aujourd'hui couramment des objets portatifs comprenant une unité centrale de traitement d'informations, un clavier permettant à un utilisateur de faire entrer des données dans l'unité centrale et d'en commander le fonctionnement et un écran de visualisation des données saisies par l'unité centrale ou de résultats intermédiaires ou finaux des traitements exécutés dans cette unité centrale. Eventuellement de tels objets peuvent comprendre des moyens de connexion à d'autres appareils de traitement d'informations. A titre d'exemple de tels objets portatifs on peut citer les calculatrices de poche.

On décrit à la demande de brevet européen EP-A-0 338 936 du 21 avril 1989 un dispositif portable électronique comprenant des moyens de réception optique, un microcalculateur, un afficheur, une source d'énergie électrique pour alimenter les divers circuits et organes du dispositif, un clavier permettant à l'utilisateur d'entrer des informations dans le microcalculateur et des moyens de mémorisation. Le microcalculateur est programmé pour recevoir par l'intermédiaire des moyens de réception optique et stocker dans les moyens de mémorisation des données représentatives d'un scénario de participation à un programme diffusé par une station d'émission. Des données introduites au clavier par l'utilisateur du dispositif sont prises en compte pendant le déroulement du programme et traitées de manière à produire un résultat ou gain fonction du traitement et visualisé sur l'afficheur.

Ce dispositif, destiné en particulier à des applications du type pari ou jeu, vise alors à produire un tel résultat ou gain qui doit être transmis à des moyens de gestion centralisés pour être affecté au compte de l'utilisateur.

Pour que ce résultat ou gain affiché soit transféré dans ces moyens de gestion centralisés, on peut demander à l'utilisateur de lire l'afficheur et de recopier sa lecture sur le clavier d'un terminal spécialisé, ou de retransmettre le résultat affiché par téléphone, par exemple. De telles procédures de transmission impliquent un pourcentage substantiel d'erreurs humaines, qui les rendent peu satisfaisantes.

On peut alors songer à munir l'objet ou dispositif portatif de moyens de connexion électriques avec un réseau de communication. On sait cependant que la présence de connexions électriques créent des problèmes de fiabilité mécanique et/ou électrique. En outre elles grèvent sensiblement le coût de l'objet portatif, ce qui est un grave inconvénient quant cet objet est destiné à une large diffusion exigeant un bas prix de revient de fabrication, comme c'est le cas en particulier dans les applications de paris ou de jeux mentionnées ci-dessus.

On connaît de DE-A-3 047 322 un dispositif de traitement de données venues d'une carte, de crédit ou d'identification par exemple. La transmission s'opère par modulation binaire de l'émission d'un photodiode, ou de la réflectance d'un plage d'un organe d'affichage à cristaux liquides porté par la carte, et lecture de cette modulation par le dispositif.

On connaît également de FR-A-2 436 448 un lecteur de code optique formé par exemple sur une carte de crédit, ce lecteur comprenant un comparateur à seuil souple, ajusté par rapport au signal parvenant au lecteur en l'absence de carte dans celui-ci.

On connaît aussi du brevet US-A-4.575.621 un dispositif de transaction, du type carte de crédit, comprenant des moyens optiques pour assurer une transmission bidirectionnelle d'informations entre le dispositif et un terminal adapté pour recevoir ce dispositif. Dans chaque sens, une interface de transmission optique comprend une paire diode électroluminescente/phototransistor, les deux paires et l'électronique associée grevant ainsi sensiblement le prix de revient du dispositif.

La présente invention a donc pour but de réaliser un système de transmission d'informations entre un objet portatif générateur de ces informations et des moyens de traitement de ces informations, qui soit fiable quant à l'exactitude des informations transmises et qui ne grève pas le coût de fabrication de l'objet portatif.

La présente invention a aussi pour but de réaliser un tel système qui sollicite au minimum la source d'énergie électrique incorporée à l'objet portatif.

La présente invention a encore pour but de réaliser un objet portatif et un lecteur d'informations élaborées par et objet, conçus pour faire partie de ce système.

L'invention est définie par les revendications 1 et 13.

Suivant un mode de réalisation préféré de l'invention, l'écran à cristaux liquides de l'objet comprend plusieurs plages commandées chacune par les moyens pour moduler la réflectance de cette plage en fonction d'informations alphanumériques à afficher ou d'informations binaires à transmettre aux moyens de traitement, le lecteur comprenant alors une ou plusieurs sources lumineuses agencées pour éclairer lesdites plages de l'écran et des capteurs sensibles chacun à la fraction de la lumière qui est réfléchie par une des plages éclairées, de manière à assurer une transmission en parallèle d'informations binaires entre l'objet portatif et les moyens de traitement.

Le lecteur peut comprendre, en outre, des moyens de commande optiques d'opérations préparatoires à un transfert d'informations de l'objet vers le lecteur, ces moyens étant constitués par au moins une source lumineuse modulée en fonction d'informations de commande émises par le lecteur, l'objet portatif comprenant au moins un organe photosensible placé en regard de cette source pour délivrer un signal à des moyens de traitement d'informations de l'objet propres à préparer et exécuter le transfert des informations.

Le lecteur comprend encore un comparateur pour comparer le signal de sortie d'un capteur photosensible à un signal de référence et des moyens pour ajuster ce signal de référence en fonction d'au moins un niveau de réflectance d'une plage de l'écran de l'objet placé dans le poste de réception, en préparation à un transfert d'informations, ce niveau de réflectance étant représentatif de l'un de deux états d'une information logique à transmettre optiquement pendant ce transfert.

Le lecteur peut prendre la forme d'une borne installée dans un lieu accessible au public. Cette borne peut, suivant un mode de réalisation de l'invention, être connectée par un réseau câblé à un appareil de traitement d'informations distant de la borne.

L'objet du système peut être portatif et comprendre en outre des moyens photosensibles agencés pour recevoir des signaux optiques du lecteur, pour la commande d'une préparation du système à une transmission d'informations.

Ainsi, grâce au système de transmission suivant l'invention, assure-t-on une transmission d'informations de l'objet portatif vers des moyens de traitement en utilisant, comme interface de transmission, l'écran à cristaux liquides de l'objet lui-même alors que celui-ci est normalement utilisé à d'autres fins. On assure ainsi une transmission automatique des informations, dégagée de toute erreur de transcription humaine, qui ne fait appel à aucune interface spécialisée telle qu'une connexion électrique, tout en pouvant fonctionner en parallèle avec une telle connexion si celle-ci est justifiée par d'autres considérations. Par la suppression de cette interface spécialisée, on maintient le coût de fabrication de l'objet portatif à un bas niveau compatible avec des applications grand public et on réduit la quantité d'énergie électrique appelée de la pile qui alimente l'objet portatif pendant une transmission d'informations, du fait qu'on utilise pour cette transmission un écran du type à cristaux liquides dont la consommation électrique est la plus faible parmi les afficheurs connus utilisables sur un objet portatif.

D'autres caractéristiques et avantages du système suivant la présente invention apparaîtront à la lecture de la description qui va suivre et à l'examen du dessin annexé dans lequel :

- la figure 1 est une vue schématique en perspective d'un objet portatif et d'un lecteur formant partie du système suivant l'invention, l'objet portatif étant représenté installé sur le lecteur,
- la figure 2 est un schéma fonctionnel utile à la description de la constitution et du fonctionnement du système de transmission suivant l'invention,
- la figure 3 est une vue perspective d'une barrette de diodes électroluminescentes et de phototransistors associés à ces diodes formant partie du lecteur du système suivant l'invention,
- la figure 4 est une vue en coupe de la barrette de la figure 3, passant par les axes d'une diode et d'un phototransistor associé, et
- la figure 5 est un schéma d'un dispositif électronique associé à la barrette des figures 3 et 4 et formant partie du lecteur du système suivant l'invention.

Comme représenté aux figures, ce système de transmission est constitué essentiellement d'un objet portatif 1 et d'un lecteur 2 muni d'un poste de réception 3 permettant d'installer l'objet portatif sur le lecteur.

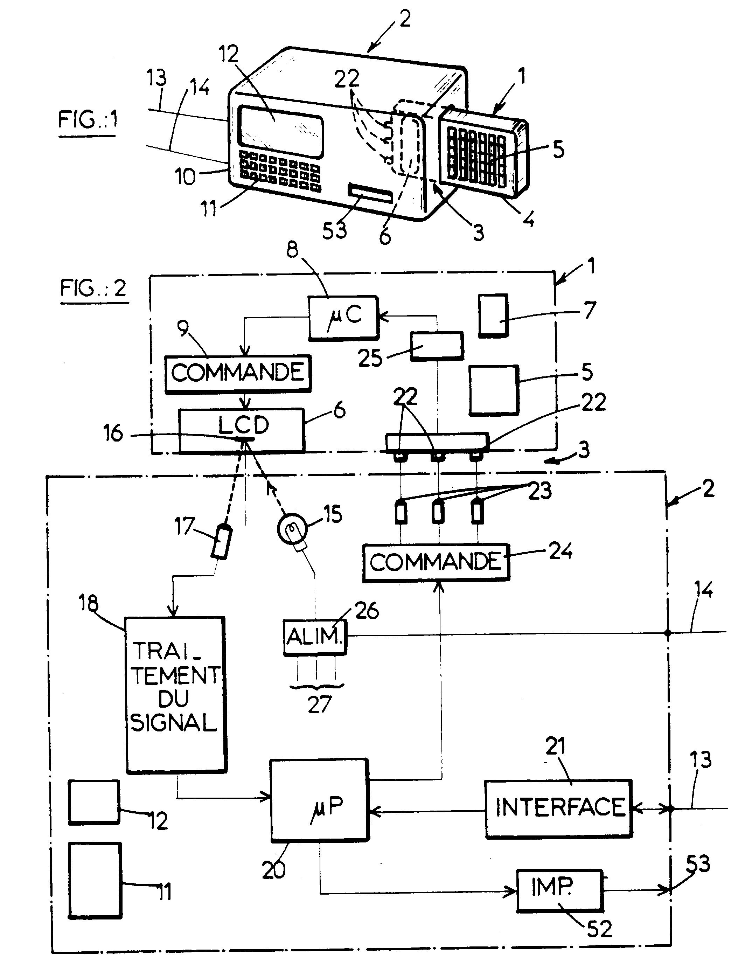

Cet objet est du type décrit en préambule de la présente description et comprend, classiquement, des moyens de traitement d'informations protégés par un boîtier 4, ce boîtier portant en outre un clavier 5 pour entrer des informations dans les moyens de traitement et pour commander le fonctionnement de ces moyens, et un afficheur comprenant un écran à cristaux liquides 6 (dit aussi LCD). Pour la mise en oeuvre du système de transmission suivant l'invention, les moyens de traitement et cet écran 6 présentent des caractéristiques particulières qui seront décrites en détail dans la suite. L'alimentation des circuits et organes de l'objet portatif 1 est assuré par une pile électrique 7 (voir figure 2). A cet égard il faut remarquer que l'encombrement de cette pile étant nécessairement limité dans un objet portatif, il convient de limiter aussi la consommation des dispositifs installés dans l'objet pour assurer à celui-ci une durée de fonctionnement raisonnable, avant le remplacement éventuel de la pile. C'est donc un objectif essentiel de la présente invention que d'installer, entre l'objet portatif et le lecteur 2, un système de transmission d'informations qui n'exige, de la part de cet objet, qu'une quantité d'énergie minimum tirée de la pile. On verra en détail dans la suite comment l'invention permet d'atteindre cet objectif.

Les moyens de traitement d'informations prévus dans l'objet portatif peuvent comprendre, classiquement, un microcontrôleur 8 alimenté par des informations injectées à l'aide du clavier et, notamment, un circuit de commande 9 de l'écran à cristaux liquides 6, éventuellement intégré au microcontrôleur. De tels circuits de commande figurent couramment aux catalogues des fabricants de circuits intégrés, en version séparée ou intégrée au microcontrôleur, et n'exigent pas une description détaillée.

Le lecteur 2 du système suivant l'invention comprend, dans un boîtier 10, outre le poste de réception 3 de l'objet portatif, un clavier 11 et un écran 12 de tout type connu, qui sont des organes classiquement disposés sur tout terminal informatique pour l'entrée et l'affichage de données. Une ligne 13 raccorde éventuellement le lecteur 2 à un appareil de traitement d'informations centralisé (non représenté) interconnecté, suivant un mode de réalisation de l'invention, avec le lecteur 2 par un réseau câblé dont fait partie la ligne 13. Une autre ligne 14 assure l'alimentation électrique du lecteur par le secteur.

Un tel lecteur peut prendre la forme d'une borne installée dans un lieu accessible au public pour permettre à un grand nombre de personnes de transmettre des informations contenues dans l'objet portatif à l'appareil de traitement centralisé. Une telle situation existe, comme on l'a vu en préambule de la présente description lorsque, par exemple, une donnée liée au résultat d'un pari ou autre jeu, élaborée dans l'objet portatif à la suite de commandes appropriées mises en oeuvre par un joueur à l'aide du clavier 5 de l'objet, doit être transmise à des moyens de traitement permettant la valorisation des gains du joueur. Une telle transmission implique, classiquement, l'existence d'une interface spécialisée de liaison entre l'objet portatif et cet appareil, du type électrique ou radioélectrique, par exemple. Une telle interface spécialisée accroît le coût de l'objet portatif et entraîne une consommation d'énergie électrique supplémentaire qui draine exagérément celle contenue dans la pile de l'objet portatif.

Suivant la présente invention on fait l'économie de cette interface supplémentaire de transmission spécialisée en utilisant, d'une manière particulière qui sera décrite en détail dans la suite, l'afficheur à cristaux liquides normalement prévu pour visualiser des données que l'on fait entrer dans les moyens de traitement ou des résultats élaborés par ceux-ci.

Pour ce faire l'afficheur comprend au moins une plage 16 dont la réflectance est modulable, sous la commande des moyens de traitement incorporés à l'objet portatif, en fonction d'une information à transmettre à l'appareil de traitement centralisé de ces données.

De son côté le lecteur comprend, dans le poste de réception 3 de l'objet portatif, des moyens optiques constitués par une source lumineuse 15 pour éclairer ladite plage 16 (une diode électroluminescente ou LED, par exemple) et un capteur photosensible 17 (un phototransistor par exemple), directionnel de préférence, orienté vers cette plage suivant une direction choisie. La source lumineuse peut être alimentée électriquement à partir du secteur par la ligne 14, à travers un circuit d'alimentation 26 qui produit également des tensions d'alimentation des autres organes et circuits du lecteur, tensions délivrées sur les lignes de sortie 27. En modulant électriquement la réflectance de la plage 16, comme on le fait classiquement pour faire apparaître des caractères de couleur foncée sur un fond clair dans un afficheur à cristaux liquides, on module la quantité de lumière réfléchie par la plage 16 sur l'axe du capteur optique 17, qui produit alors un signal électrique modulé comme la réflectance de la plage 16. Après filtrage et mise en forme (dans un bloc de traitement de signal 18) de ce signal, on dispose d'un signal numérique qui entre dans des moyens de traitement d'informations 20, un microprocesseur par exemple, disposés dans le lecteur 2. L'information numérique ainsi reçue par le microprocesseur 20 est alors conforme à celle émise par l'objet portatif 1 et transmise, suivant une caractéristique essentielle de la présente invention, grâce à l'écran 6 à cristaux liquides, normalement utilisé à d'autres fins et à une lecture d'une plage de celui-ci, assurée à l'aide d'un capteur photosensible directionnel.

Le microprocesseur alimenté par l'information ainsi reçue, relative aux gains d'un joueur par exemple, peut déclencher une action telle que l'émission d'un ticket par une imprimante incorporée au lecteur, le ticket portant des informations permettant au joueur de faire valoir ces gains, comme on le verra plus loin à titre d'exemple non limitatif.

L'information numérique reçue par le microprocesseur 20 peut aussi, suivant un autre mode de réalisation de l'invention, être formatée et conformée dans une interface 21 avant d'être injectée sur la ligne 13 pour être transmise à l'appareil de traitement centralisé.

En variante, l'objet portatif 1 comprend plusieurs plages commandées chacune par des moyens pour moduler la réflectance de cette plage en fonction d'informations à transmettre à l'appareil de traitement, le lecteur comprenant alors autant de sources lumineuses agencées pour éclairer chacune l'une desdites plages de l'écran et autant de capteurs sensibles chacun à la fraction de la lumière d'une source qui est réfléchie par la plage éclairée par cette source, de manière à assurer une transmission en parallèle d'informations entre l'objet portatif et les moyens de traitement.

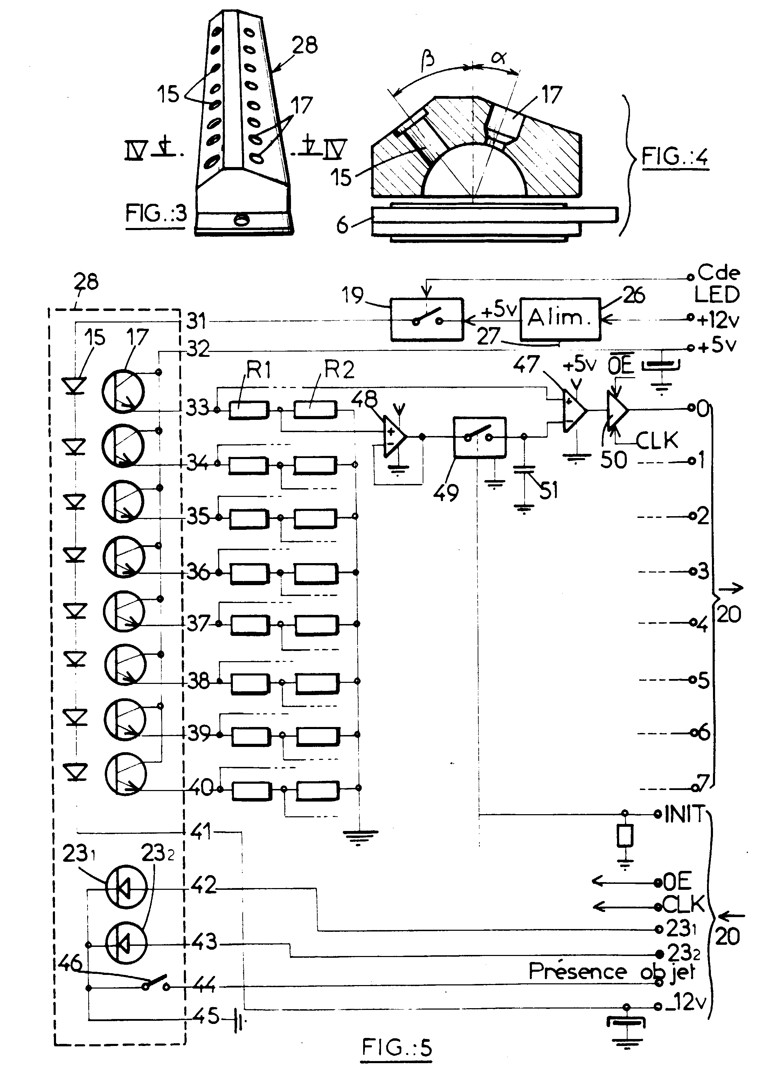

On décrira en détail dans la suite, en liaison avec les figures 3 à 5, un mode de réalisation particulier d'un système de transmission conçu pour assurer une telle transmission en parallèle.

Le système suivant l'invention permet ainsi d'assurer une transmission automatique d'informations, donc dépourvue des erreurs qu'implique la transcription manuelle d'une information sur un clavier par un utilisateur, sans que cette possibilité supplémentaire n'alourdisse le prix de revient de fabrication de l'objet portatif, qui doit être aussi bas que possible dans certaines applications telles que les jeux ou paris organisés par des médias du type évoqué en préambule de la présente description. Bien sur le microcontrôleur 8 présent dans l'objet portatif doit être dûment programmé suivant un protocole spécialisé assurant la commande de la réflectance de la plage 16 conformément à l'information à transmettre. Mais il s'agit là essentiellement de moyens logiciels qui n'impliquent pas la présence de moyens matériels supplémentaires d'un coût sensible, susceptibles d'affecter défavorablement le coût de l'objet portatif.

Par ailleurs celui-ci, tout comme le dispositif portable décrit dans la demande de brevet européen précitée pourrait être muni d'un ou plusieurs organes photosensibles 22 tels que des photodiodes ou des phototransistors agencés pour coopérer avec des moyens de transmission optiques pour assurer une réception, par l'objet portatif, d'informations d'origine extérieure à cet objet.

Suivant la présente invention, le lecteur 2 du système selon l'invention est alors muni de moyens de commande optiques, constitués par un ou plusieurs organes photoémetteurs 23 tels que des diodes électroluminescentes par exemple.

Les informations à transmettre sont traduites par le microprocesseur 20 en une commande adaptée d'un circuit de commande 24 des organes photoémetteurs 23 qui traduisent alors l'information (numérique) à transmettre en signaux optiques correspondants. Ceux-ci sont alors repris par les organes photosensibles 22 convenablement disposés à cet effet dans le poste de réception 3 par rapport aux photoémetteurs 23, et transmis sous forme de signaux électriques chargés d'une information numérique, au microprocesseur 8 de l'objet portatif, à travers une interface d'adaptation 25.

Ainsi l'objet portatif peut-il recevoir, optionnellement, des informations. Un tel transfert d'informations peut être utilisé, par exemple, pour préparer l'émission par l'objet portatif des signaux à transmettre aux moyens de traitement. Les informations transmises optiquement à l'objet portatif peuvent concerner, par exemple, le type d'informations que l'objet portatif doit transférer au lecteur.

On se réfère maintenant aux figures 3 à 5 du dessin annexé pour décrire en détail un mode de réalisation du lecteur formant partie du système de transmission suivant l'invention conçu, comme on l'a indiqué plus haut, pour assurer une transmission en parallèle d'informations de l'objet portatif vers des moyens de traitement de ces informations.

A la figure 3 on a représenté une barrette 28 comportant, à titre d'exemple, huit diodes électroluminescentes 15 alignées parallèlement à huit phototransistors 17, chaque diode étant associée à un phototransistor pour assurer la lecture d'informations affichées à l'une de huit plages de caractères alignées de l'écran 6 à cristaux liquides, placées en regard de la barrette 28. De préférence des cloisons isolent optiquement chaque couple diode/phototransistor des couples adjacents. La barrette 28 est agencée dans le poste de réception 3 du lecteur 2 de manière que l'insertion de l'objet portatif 1 dans le lecteur assure automatiquement la mise en place, en repérage, de l'écran 6 de l'objet et de la barrette 28 du lecteur.

On a représenté à la figure 4 une coupe de la barrette 28 par un plan passant par l'axe d'une diode 15 et l'axe de la surface sensible d'un phototransistor associé 17. On remarquera que l'angle $\alpha$ qui repère la position de l'axe de la surface sensible du phototransistor 17 par rapport à la normale au plan de la plage associée de l'écran de l'afficheur à cristaux liquides 6, est de préférence différent de l'angle $\beta$ qui repère la position de l'axe de la diode 15 par rapport à cette même normale. En effet, pour la plupart des afficheurs à cristaux liquides du commerce la zone de perception du meilleur contraste correspond à un angle $\alpha$ tel que :

$$0 < \alpha < 20°$$

Il convient donc de choisir $\alpha$ dans cette fourchette

et de prendre, par exemple :

$$\alpha = 15°$$

En ce qui concerne l'angle $\beta$ de l'axe de la diode associée il convient d'éviter tout d'abord qu'une partie de la lumière émise par la diode ne soit réfléchie par réflexion totale sur l'écran de l'afficheur, dans l'axe de la surface sensible du phototransistor 17. Il est donc préférable que $\beta$ soit différent de $\alpha$, si, pour des raisons de compacité par exemple, on préfère que le plan des axes de la diode et du phototransistor associés passe par la normale à la plage 16 dont on détecte les variations commandées de réflectance. Cette plage correspond normalement à une position de caractère de l'écran.

Des essais ont en outre montré que le taux de variation de la lumière réfléchie par une telle plage d'un écran à cristaux liquides passant de l'état "éteint" à l'état "allumé", est maximal (40 % environ), quand on le mesure sur l'axe repéré par l'angle $\alpha$ choisi comme indiqué ci-dessus, quand l'angle $\beta$ de la diode est choisi plus grand que $\alpha$, autour de 45° par exemple.

Ayant ainsi choisi $\alpha$ et $\beta$, on peut encore maximiser la modulation de la lumière par l'écran à cristaux liquides, en "noircissant" au maximum la plage de caractère éclairé par une diode pour la transmission d'un signal logique "0" par exemple. Pour ce faire on commande l'allumage simultané de tous les segments d'une même plage de caractère ou "digit", soit quatorze segments par exemple. On peut aussi limiter la partie de la plage de caractère qui est "vue" par le phototransistor, de manière que celle-ci englobe une surface maximale de segments.

Outre les contraintes évoquées ci-dessus en matière de positionnement des éléments d'un couple diode/phototransistor propre à permettre l'obtention d'un rendement optimal (différence des réflectances pour les niveaux "0" et "1"), d'autres contraintes sont à prendre en compte concernant :

- le choix, parmi les composants disponibles dans le commerce, du couple diode/phototransistor assurant le meilleur compromis coût/performance,
- la température de fonctionnement, du fait que le lecteur du système suivant l'invention subit les contraintes d'environnement de l'endroit où il est placé,
- la capacité du système à s'adapter à une baisse de la tension de la pile 7 qui alimente l'objet portatif,
- l'effet de la lumière ambiante sur les performances des couples diode/phototransistor utilisés pour la lecture de l'écran à cristaux liquides,
- l'influence des variations commandées de réflectance d'une plage de caractère (digit) sur les plages voisines.

En ce qui concerne le choix de composants, il faut aussi tenir compte de l'encombrement de ceux-ci, qui ne doit pas dépasser un diamètre de 3 mm avec les écrans à cristaux liquides disponibles dans le commerce.

Bien entendu, le spectre de sensibilité du phototransistor choisi doit être adapté au spectre de l'émission de la diode. En outre une diode à forte puissance lumineuse est à choisir de préférence pour lutter efficacement contre les effets de la lumière ambiante. A cet égard, on peut aussi choisir une diode à fort rendement et/ou rapprocher les composants de l'écran, et/ou rendre le lecteur étanche à la lumière.

En ce qui concerne le phototransistor, celui-ci doit présenter de préférence un angle de réceptivité faible pour éviter de prendre en compte les modulations de réflectance des plages de caractère voisines.

Un couple utilisable dans la présente invention est constitué par une diode émettrice type CQ593-P334NL et un phototransistor BPW 22-AII, tous deux fabriqués par la société dite RTC. Bien entendu de nombreux autres couples satisfaisant aux critères de choix définis ci-dessus pourraient être sélectionnés par l'homme de métier parmi les composants existants.

On se réfère maintenant à la figure 5 du dessin annexé où l'on a représenté un schéma d'un dispositif électronique associé à la barrette 28 des figures 3 et 4 et installé dans le lecteur 2 du système suivant l'invention. Ce dispositif correspond pour l'essentiel aux organes 15, 17, 23 et aux blocs 18, 24 et 26 du schéma du lecteur 2 représenté à la figure 2.

Sur la figure 5, il apparaît que huit diodes électroluminescentes (LED) 15 sont alimentées en série, grâce à une ligne 31, entre une borne connectée à une source d'énergie électrique continue, à + 12 volts par exemple, et une borne à - 12 volts, par exemple (ligne 41). Le bloc d'alimentation 26 est alimenté par cette source et il est régulé pour délivrer d'une part une tension stabilisée à + 5 volts aux diodes et une tension stabilisée à + 12 volts utilisée par d'autres circuits ou organes du lecteur 2 (voir les lignes 27 de la figure 2). Un commutateur 19 est placé en série avec l'alimentation stabilisée 26 et ce commutateur est commandé par une sortie "commande LED" du microprocesseur 20 programmé pour mettre les diodes 15 sous tension en préparation à une transmission d'informations émises par un objet portatif 1 installé dans le lecteur 2. A cet égard on notera que le poste de réception du lecteur comprend un palpeur 46 ou autre détecteur sensible à la présence de l'objet dans le poste, pour envoyer un signal significatif d'une "présence objet" au microprocesseur 20.

Les collecteurs de huit phototransistors 17 sont connectés en parallèle à une ligne 32 connectée à une source de tension à + 5 volts continue. L'émetteur du phototransistor 17 connecté à une ligne 33 est aussi connecté à l'entrée positive d'un comparateur 47. L'entrée négative du comparateur 47 est connectée au point milieu d'un pont diviseur de tension constitué par des résistances R1 et R2 connectées en série entre le l'émetteur du phototransistor 17 et la masse, à travers un amplificateur 48 et un commutateur 49 commandé par une sortie "initialisation" du microprocesseur 20 pour une raison que l'on expliquera dans la suite. Une capacité 51 est connectée entre l'entrée négative du comparateur 47 et la masse. Une bascule 50 du type D est interposée entre la sortie du comparateur 47 et une entrée "0" du microprocesseur. Cette bascule est commandée classiquement par des signaux OE (validation de sortie) et d'horloge CLK émis par le microprocesseur pour constituer ainsi une interface de synchronisation des signaux venus de la barrette 28, pour le microprocesseur 20.

Le sous-circuit (R1, R2, 47, 48, 49, 50, 51) qui vient d'être décrit est répété autant de fois que la barrette 28 compte de couples diode/phototransistor. Pour la clarté de la figure 5, ce sous-circuit n'a été représenté qu'une fois. Il correspond au bloc 18 du schéma de la figure 2, utilisé pour mettre en forme le signal délivré par le phototransistor 17. Son rôle est de convertir les variations de la tension sur l'émetteur du phototransistor 17 associé, correspondant à des états "allumé" ou "éteint" de la plage de caractère associé de l'écran de l'afficheur, en signaux numériques susceptibles d'être compris par le microprocesseur, tels que des signaux de niveaux TTL ou C-MOS par exemple, suivant la technologie choisie pour ce microprocesseur.

Pour ce faire on compare la tension sur l'émetteur du phototransistor à une tension continue de référence chargée dans la capacité 51. Les dispersions des caractéristiques de réflexion des afficheurs à cristaux liquides, des caractéristiques d'émission des diodes et des caractéristiques de réception des phototransistors sont telles que le seuil de comparaison ne peut être fixé à l'avance. Aussi, suivant une caractéristique de la présente invention, avant toute transmission d'informations, le microprocesseur commande-t-il une initialisation des comparateurs 47 en fermant les commutateurs 49 pour charger la capacité 51 à une valeur de seuil qui va être déterminée par la tension sur le collecteur du phototransistor quand les plages de caractères sont "éteintes" et par le rapport de réduction établi par le pont diviseur (R1,R2). En choisissant R1/R2 = 1/9 par exemple, la valeur de seuil chargée sera proportionnelle à 90 % de la tension sur l'émetteur du phototransistor, plage de caractère de l'écran "éteinte", cette garde de 10 % étant considérée comme suffisante pour assurer dans tous les cas la commutation de la sortie du comparateur 47 à "l'allumage" de la plage de caractère, quelles que soient les variations de contraste de l'écran d'un objet portatif à l'autre, et l'état de la pile qui l'alimente. A cet égard il faut noter que chacune des sorties 0 à 7, connectées à autant d'entrées correspondantes du microprocesseur 20, est à "1" lorsque la plage de caractère associée est "éteinte" (segments de caractère invisibles à l'oeil nu) et passe à zéro lorsque tous les segments sont opacifiés pour abaisser la réflectance de la plage du caractère.

Bien entendu, on ne sortirait pas du cadre de l'invention en initialisant chaque comparateur alors que tous les segments d'une plage sont opacifiés, pour charger la capacité 51 en la connectant à l'émetteur du phototransistor. Dans ce cas, en fonctionnement, la comparaison s'opère avec un signal d'entrée du comparateur réduit, par exemple de 10%, à l'aide d'un pont de résistances tel que (R1, R2).

Dans les deux cas la valeur de la capacité est calculée en fonction de la longueur des messages à transmettre en binaire et du courant de fuite.

Suivant un mode de réalisation préféré de l'invention, l'initialisation des comparateurs (47) s'opère avant chaque transfert d'informations binaires, l'objet portatif étant présent dans le lecteur et alors que l'écran (6) de l'objet portatif est mis sous tension. L'initialisation prend ainsi en compte la réflectance effective du fond de l'écran, liée à la tension d'alimentation de l'écran. Ainsi on pourra tenir compte d'éventuelles surtensions de cette alimentation, lorsque celle-ci est assurée par une pile neuve par exemple, ou de sous-tensions à la fin de la durée de vie de cette pile. On assure alors une détection plus précise du niveau logique "1", opérée lorsque l'écran est "éteint", la réflectance de l'écran étant alors conditionnée par la tension d'alimentation et par le procédé utilisé pour fabriquer l'écran.

On remarque encore sur la figure 5 la présence, dans la barrette 28, de deux diodes $23_1$ et $23_2$ commandées par des sorties correspondantes du microprocesseur 20. Ces diodes correspondent aux diodes 23 du schéma de la figure 2 et éclairent des organes photosensibles phototransistors par exemple 22 incorporés au circuit de l'objet portatif 1. Par ces diodes le microprocesseur 20 du lecteur peut transmettre des informations numériques à l'objet portatif. Il en est ainsi notamment, comme on le verra plus loin, au début de l'exécution d'un protocole de transmission d'informations de l'objet portatif vers l'appareil de traitement centralisé.

Le fonctionnement du système suivant l'invention s'établit alors comme suit. Pour procéder à une transmission d'informations, l'utilisateur comprime une touche spécifique du clavier 5 de l'objet portatif. L'objet est ainsi préparé à recevoir des informations préparatoires (type d'informations à transmettre au lecteur) à la transmission proprement dite, par les phototransistors 22 placés en face des diodes $23_1$ et $23_2$ commandées par le lecteur 2.

On introduit ensuite l'objet dans le poste de réception 3 du lecteur 2. Le microprocesseur 20 est prévenu de cette introduction par le détecteur 46 de présence d'objet. Le microprocesseur commande alors l'allumage des diodes 15 et envoie à l'objet portatif, par les diodes $23_1$ et $23_2$, un ordre d'extinction des plages de caractère de l'écran 6 pour permettre l'initialisation des comparateurs 47. En effet, au moment de l'introduction de la carte dans le lecteur, certaines plages pourraient être opacifiées ou "allumées", ce qui perturberait l'initialisation des comparateurs associés. Une fois les seuils des comparateurs réglés par la procédure décrite ci-dessus, le microprocesseur 8 de l'objet portatif 1 commande l'allumage de tous les segments de toutes les plages de caractère, pendant 0,5 seconde par exemple, pour vérifier le réglage des seuils par une réception d'état "0". La transmission des informations de l'objet vers le lecteur peut commencer ensuite sur 8 bits, en parallèle.

Suivant une application du système de transmission selon l'invention, décrite dans la demande de brevet européen précitée, les informations concernent des gains obtenus par un joueur. L'objet portatif prend la forme d'une "carte" qui émet alors vers le lecteur un "certificat de gain". Comme on l'a vu plus haut le lecteur prend alors la forme d'une borne installée dans un lieu public, en "self-service". La borne reçoit et traite dans le microprocesseur 20 les informations reçues de la carte. Le microprocesseur 20 de la borne est programmé pour appliquer une procédure de détection d'erreurs et une procédure de détection de "fin de transmission" aux informations ainsi transmises. Pour la transmission des informations, le microcontrôleur 8 de la carte commande l'opacification des huit plages de caractères de l'écran LCD 6 en fonction des informations à transmettre à l'appareil de traitement. Diverses procédures peuvent être utilisées pour signaler la fin de la transmission. A titre d'exemple, celle-ci peut intervenir quand des bits en nombre prédéterminé, 40 par exemple, ont été transmis, ce nombre correspondant au format maximum de la transmission.

Suivant un mode de réalisation préféré de l'invention, la borne 2 comprend une imprimante 52 commandée par le microprocesseur 20 pour éditer un support d'informations matériel tel qu'un ticket qui apparaît à une sortie 53 de la borne (voir figures 1 et 2) pour que le joueur puisse garder une trace matérielle de la transmission opérée et utiliser ce ticket pour valoriser ces gains.

Suivant un autre mode de réalisation de l'invention, la borne transmet par une ligne 13 à un appareil de traitement centralisé, les informations reçues de la carte.

Les informations de "gains" ainsi transmises à l'appareil de traitement sont alors affectées à un compte particulier au joueur en vue d'une valorisation ultérieure de ses gains.

Une fois la transmission terminée, l'utilisateur de l'objet retire celui-ci de la borne. Le microprocesseur 20 est prévenu de ce retrait par le détecteur 46 et commande l'extinction des diodes 15.

La sûreté du fonctionnement du système suivant l'invention peut être renforcée par une procédure de test du lecteur, mise en oeuvre à la mise sous tension de ce lecteur, par exemple, en l'absence de tout objet portatif dans le lecteur. Cette procédure comprend alors une mise sous tension de la barrette de diodes, la lumière émise par les diodes étant alors renvoyée sur les capteurs par une surface réfléchissante placée à cet effet dans le poste de réception, une initialisation des comparateurs sur le niveau "1" en sortie, une extinction des diodes et un contrôle du fait que les huit sorties doivent alors passer à zéro. On notera à cet égard que, les diodes 15 étant connectées en série (voir figure 5) le test sera négatif si une seule diode est défaillante.

Ainsi le système suivant l'invention permet-il d'assurer une transmission automatique et sûre d'informations, d'un objet portatif se présentant par exemple sous la forme d'une "carte", vers des moyens de traitement de ces informations sans faire appel à une autre interface physique qu'un afficheur à écran à cristaux liquides présent de toute façon sur la carte à d'autres fins.

Grâce à l'utilisation d'un écran à cristaux liquides, dont la consommation en énergie est très faible, la transmission ne draine que très peu l'énergie contenue dans la pile d'alimentation qui assure l'autonomie de la carte.

Bien entendu, les moyens optiques et optoélectroniques utilisés dans la présente invention, pour assurer un transfert d'informations, peuvent prendre diverses formes et sont susceptibles d'adaptation, ainsi que le reconnaîtra aisément l'homme de métier, notamment en fonction du type d'afficheur à cristaux liquides utilisé. De nombreux capteurs photosensibles directionnels sont disponibles sur le marché pour constituer les capteurs 17. Il en est de même des diodes 17, aux limitations mentionnées ci-dessus près. De nombreux afficheurs à écrans à cristaux liquides sont aussi utilisables. A titre d'exemple, l'afficheur référencé FRD 0346P dans les catalogues de la société OPTREX assure un affichage d'informations avec un contraste suffisant. Il faut noter à ce sujet que ce contraste suffisant n'a pas besoin d'être élevé car, s'agissant de la transmission d'informations numériques, le signal délivré par le capteur peut présenter une dynamique modérée.

Dans ce qui précède, l'objet 1 est décrit comme étant portatif du fait que ce caractère est nécessaire dans une application du système suivant l'invention à la transmission de gains réalisés par un joueur à un appareil de traitement centralisé d'informations qui recueille ces gains par l'intermédiaire de bornes (lecteurs) accessibles au public.

Il est clair cependant que l'invention n'est pas limitée à un système conçu exclusivement pour de telles applications et s'étend, au contraire, à tout système assurant une transmission d'informations par l'intermédiaire d'une lecture automatique d'un écran à cristaux liquides, ou plus généralement, d'un écran comprenant des plages dont on peut faire varier la réflectance. L'invention s'étend ainsi à des systèmes dans lesquels l'objet n'est pas portatif, le lecteur pouvant l'être, ou bien encore à des systèmes dans lesquels ni l'objet ni le lecteur n'est portatif.

**Revendications**

1. Système de transmission d'informations entre un objet chargé d'informations et un appareil de traitement de ces informations, dans lequel l'objet (1) comprend un dispositif à cristaux liquides et des moyens pour moduler la réflectance d'au moins une plage (16) du dispositif à cristaux liquides en fonction d'informations à transmettre à l'appareil de traitement, le système comprenant en outre un lecteur (2) muni d'un poste de réception (3) conçu pour recevoir amoviblement l'objet (1) sans connexion électrique entre eux, de moyens optiques (15, 17) disposés dans ce poste et sensibles à la réflectance de ladite plage (16) du dispositif à cristaux liquides (6) pour former des signaux représentatifs d'informations déchargées par l'objet, et de moyens de traitement et de transmission (18,20,21,13) de ces signaux à l'appareil de traitement, ce système étant caractérisé en ce que le dispositif à cristaux liquides est constitué par un écran d'affichage (6) d'informations alphanumériques associé à des moyens de commande (8,9) prévus pour commander sélectivement d'une part l'affichage de caractères alphanumériques sur une pluralité de plages de l'écran en conformité avec des informations alphanumériques élaborées dans l'objet, et d'autre part la modulation binaire de la réflectance d'au moins une plage de cet écran pour la transmission au lecteur d'informations binaires élaborées dans l'objet.

2. Système conforme à la revendication 1, caractérisé en ce que l'écran à cristaux liquides (6) de l'objet (1) comprend plusieurs plages (16) chacune modulée en réflectance par lesdits moyens de commande en fonction d'informations alphanumériques à afficher ou d'informations binaires à transmettre à l'appareil de traitement, le lecteur comprenant alors une ou plusieurs sources lumineuses (15) agencées pour éclairer lesdites plages de l'écran et des capteurs (17) sensibles chacun à la fraction de la lumière qui est réfléchie par une des plages éclairées, de manière à assurer une transmission en parallèle d'informations binaires entre l'objet et l'appareil de traitement.

3. Système conforme à l'une quelconque des revendications 1 et 2, caractérisé en ce que le lecteur comprend en outre des moyens de commande optiques (23) d'opérations préparatoires à un transfert d'informations de l'objet vers le lecteur, ces moyens étant constitués par au moins une source lumineuse ($23_1$, $23_2$) modulée en fonction d'informations de commande émises par le lecteur, l'objet comprenant au moins un organe photosensible (22) placé en regard de cette source pour délivrer un signal à des moyens de traitement d'informations (8) formant partie de l'objet, propres à préparer et exécuter le transfert des informations.

4. Système conforme à l'une quelconque des revendications 1 à 3, caractérisé en ce que le lecteur comprend en outre, des moyens de traitement (20) des informations reçues de l'objet et un détecteur (46) sensible à la présence de l'objet (1) dans le poste de réception (3) pour envoyer à ces moyens de traitement un signal représentatif de cette présence en vue de l'organisation d'un transfert d'informations de l'objet (1) vers le lecteur (2).

5. Système conforme à la revendication 4, caractérisé en ce que le lecteur comprend un comparateur (47) pour comparer le signal de sortie d'un capteur photosensible (17) à un signal de référence et des moyens (R1, R2, 48, 51) pour ajuster ce signal de référence en fonction d'au moins un niveau de réflectance d'une plage de l'écran (6) de l'objet placé dans le poste de réception, en préparation à un transfert d'informations, ce niveau de réflectance étant représentatif de l'un de deux états d'une information logique à transmettre optiquement pendant ce transfert.

6. Système conforme à la revendication 5, caractérisé en ce que le lecteur comprend des moyens (49) pour activer lesdits moyens d'ajustement (R1, R2, 48, 51) alors que l'objet est placé dans le lecteur, immédiatement avant chaque transfert d'informations et alors que l'écran d'affichage (6) à cristaux liquides est mis sous tension d'alimentation.

7. Système conforme à l'une quelconque des revendications 4 à 6, caractérisé en ce que le lecteur comprend une barrette (28) comportant une rangée de sources lumineuses (15) et une rangée de capteurs photosensibles (17) agencées pour être placées en regard de l'écran (6) de l'objet (1) inséré dans le poste de réception (3) et lire les modulations de réflectance d'autant de plages (16) de cet écran.

8. Système conforme à la revendication 7, caractérisé en ce que l'angle $\beta$ de l'axe d'une source lumineuse (15) par rapport à la normale à la plage (16) éclairée de l'écran (6) est supérieur ou égal à l'angle $\alpha$ de l'axe du capteur photosensible par rapport à cette même normale.

9. Système conforme à la revendication 8, caractérisé en ce que l'angle $\alpha$ est inférieur à 20° environ.

10. Système conforme à l'une quelconque des revendications 5 à 9, caractérisé en ce qu'il comprend une imprimante (52) commandée par les moyens de traitement d'informations (20) pour éditer sur un support matériel des informations relatives à une transmission d'informations exécutée par le système.

11. Système conforme à l'une quelconque des revendications 5 à 10, caractérisé en ce que l'appareil de traitement est un appareil de traitement centralisé de ces informations, distant du lecteur.

12. Système conforme à l'une quelconque des revendications 5 à 11, caractérisé en ce que le lecteur prend la forme d'une borne installée dans un lieu accessible au public.

13. Objet spécifié dans l'une quelconque des revendications 1 à 3.

14. Objet conforme à la revendications 13, dans lequel chaque plage du dispositif à cristaux liquides est divisée en segments individuellement opacifiables, caractérisé en ce que les moyens de commande (8, 9) pour moduler la réflectance de la plage commandent l'opacification ou la clarification simultanée de tous les segments de la plage pour transmettre au lecteur un premier ou un deuxième état d'une information en logique binaire.

15. Objet conforme à la revendication 13 ou 14, caractérisé en ce qu'il comprend des moyens photosensibles (22) agencés pour recevoir des signaux optiques du lecteur, pour la commande d'une préparation du système à une transmission d'informations.

16. Objet conforme à l'une quelconque des revendications 13 à 15, caractérisé en ce qu'il est portatif.

**Patentansprüche**

1. System zur Übertragung von Information zwischen einem mit Informationen geladenen Objekt und einer Vorrichtung zur Bearbeitung der Informationen, wobei das Objekt (1) eine Flüssigkristallvorrichtung sowie Mittel zum Modulieren des Reflexionsvermögens von mindestens einem Feld (16) der Flüssigkristallvorrichtung aufweist, und zwar abhängig von zu der Bearbeitungsvorrichtung zu übertragenden Informationen, wobei das System ferner einen Leser (2) mit einer Aufnahme (3) zum unbeweglichen Aufnehmen des Objekts (1) ohne elektrische Verbindung dazwischen, Optikmittel (15, 17), die in der Aufnahme angeordnet und empfindlich gegenüber des Reflexionsvermögens des Feldes (16) der Flüssigkristallvorrichtung (6) sind, um Signale zu bilden, die repräsentativ sind für die von dem Objekt heruntergeladenen Informationen, und Mittel zur Bearbeitung und zur Übertragung (18, 20, 21, 13) der Signale zu der Bearbeitungsvorrichtung aufweist, dadurch gekennzeichnet, daß die Flüssigkristallvorrichtung durch einen Anzeigeschirm (6) für alphanumerische Informationen gebildet ist, welcher mit Eingabe- bzw. Befehlsmitteln (8, 9) assoziiert ist, welche vorgesehen sind, um wahlweise entweder die Anzeige von alphanumerischen Zeichen auf einer Vielzahl der Felder des Schirms in Übereinstimmung mit den aus dem Objekt stammenden alphanumerischen Informationen und andererseits die Binärmodulation des Reflexionsvermögens von mindestens einem Feld des Schirms zur Übertragung der aus dem Objekt ausgelesenen Binärinformationen zum Leser zu befehlen.

2. System gemäß Anspruch 1, dadurch gekennzeichnet, daß der Flüssigkristallschirm (6) des Objekts (1) mehrere Felder (16) aufweist, die jeweils bezüglich ihres Reflexionsvermögens durch die Befehlsmittel moduliert werden, und zwar abhängig von anzuzeigenden alphanumerischen Informationen oder zu der Bearbeitungsvorrichtung zu übertragenden Binärinformationen , wobei der Leser ferner eine oder mehrere Lichtquellen (15), die vorgesehen sind zum Beleuchten der Felder des Schirms, sowie Sensoren (17) aufweist, die jeweils bezüglich desjenigen Teils des Lichts empfindlich sind, das durch eines der beleuchteten Felder reflektiert wird, und zwar derart, daß eine parallele Übertragung von Binärinformationen zwischen dem Objekt und der Bearbeitungsvorrichtung gewährleistet ist.

3. System gemäß einem der Ansprüche 1 oder 2, dadurch gekennzeichnet, daß der Leser ferner optische Befehlsmittel (23) für vorbereitende Operationen für eine Datenübertragung von dem Objekt zu dem Leser hin aufweist, wobei die Mittel gebildet werden durch mindestens eine Lichtquelle ($23_1$, $23_2$), die abhängig von den vom Leser ausgesandten Befehlsinformationen moduliert wird, wobei das Objekt mindestens eine photoempfindliche Einrichtung (22) aufweist, die gegenüber der Lichtquelle angeordnet ist zum Liefern eines Signals an Informationsbearbeitungsmittel (8), welche einen Teil des Objekts bilden und geeignet sind, die Informationsübertragung vorzubereiten und auszuführen.

4. System gemäß einem der Ansprüche 1 bis 3, dadurch gekennzeichnet, daß der Leser ferner Mittel (20) zur Bearbeitung der von dem Objekt empfangenen Informationen und eine Detektionseinrichtung (46) aufweist, welche bezüglich des Vorhandenseins des Objekts (1) in der Aufnahme (3) empfindlich ist, um ein für dieses Vorhandensein repräsentatives Signal an die Bearbeitungsmittel zu senden zur Organisation der Informationsübertragung von dem Objekt (1) zur dem Leser (2).

5. System gemäß Anspruch 4, dadurch gekennzeichnet, daß der Leser einen Komparator (47) zum Vergleichen des Ausgangssignals eines photoempfindlichen Sensors (17) mit einem Bezugssignal sowie Mittel (R1, R2, 48, 51) aufweist zum Einstellen des Bezugssignals abhängig von mindestens einem Niveau des Reflexionsvermögens eines Feldes des Schirms (6) des in der Aufnahme angeordneten Objekts zur Vorbereitung einer Informationsübertragung, wobei das Niveau des Reflexionsvermögens repräsentativ ist für einen von zwei Zuständen einer während der Übertragung optisch zu übertragenden Logikinformation.

6. System gemäß Anspruch 5, dadurch gekennzeichnet, daß der Leser Mittel (49) aufweist zum Aktivieren der Einstellmittel (R1, R2, 48, 51), sobald das Objekt in den Leser eingesetzt ist, unmittelbar vor jeder Informationsübertragung und wenn der Flüssigkristallanzeigeschirm (6) mit Spannung versorgt wird.

7. System gemäß einem der Ansprüche 4 bis 6, dadurch gekennzeichnet, daß der Leser einen Stab (28) aufweist, welcher eine Reihe von Lichtquellen (15) und eine Reihe von photoempfindlichen Sensoren (17) aufweist, die angeordnet sind, um gegenüber dem Schirm (6) des in die Aufnahme (3) eingesetzten Objekts (1) angeordnet zu werden und die Reflexionsvermögensmodulationen ebensovieler Felder (16) des Schirms zu lesen.

8. System gemäß Anspruch 7, dadurch gekennzeichnet, daß der Winkel β der Achse einer Lichtquelle (15) bezüglich der Senkrechten des beleuchteten Feldes (16) des Schirms (6) größer oder gleich dem Winkel α der Achse des photoempfindlichen Sensors bezüglich derselben Senkrechten ist.

9. System gemäß Anspruch 8, dadurch gekennzeichnet, daf der Winkel α kleiner als ungefähr 20° ist.

10. System gemäß einem der Ansprüche 5 bis 9, dadurch gekennzeichnet, daß das System einen Drucker (52) aufweist, der von den Informationsverarbeitungsmitteln (20) gesteuert wird zur Ausgabe der Informationen bezüglich einer von dem System ausgeführten Informationsübertragung auf eine Hartkopie.

11. System gemäß einem 5 bis 10, dadurch gekennzeichnet, daß die Bearbeitungsvorrichtung eine zentralisierte Bearbeitungsvorrichtung für die Informationen entfernt von dem Leser ist.

12. System gemäß einem der Ansprüche 5 bis 11, dadurch gekennzeichnet, daß der Leser die Form einer Säule besitzt, die an einem öffentlich zugänglichen Ort installiert oder aufgestellt ist.

13. Objekt, wie es in einem der Ansprüche 1 bis 3 beschrieben ist.

14. Objekt gemäß Anspruch 13, wobei jedes Feld der Flüssigkristallvorrichtung in einzeln verdunkelbare Segmente unterteilt ist, dadurch gekennzeichnet, daß die Befehlsmittel (8, 9) zum Modulieren des Reflexionsvermögens des Feldes die gleichzeitige Verdunkelung oder Beleuchtung aller Segmente des Feldes befehlen zum Übertragen eines ersten oder eines zweiten Zustands einer binären Logikinformation zu dem Leser.

15. Objekt gemäß Anspruch 13 oder 14, dadurch gekennzeichnet, daß das Objekt photoempfindliche Mittel (22) aufweist, die angeordnet sind zum Empfangen von optischen Signalen des Lesers zum Befehlen einer Vorbereitung des Systems für eine Informationsübertragung.

16. Objekt gemäß einem der Ansprüche 13 bis 15, dadurch gekennzeichnet, daß es tragbar ist.

**Claims**

1. System for the transmission of information between an article carrying information and an apparatus for processing this information, in which the article (1) comprises a liquid crystal device and means for modulating the reflectance of at least one area (16) of the liquid crystal device as a function of information to be transmitted to the processing apparatus, the system further comprising a reader (2) provided with a station (3) devised for removably receiving article (1) without electrical connection between them, optical means (15, 17) disposed in this station and sensitive to the reflectance of the said area (16) of the liquid crystal device (6) to form signals representative of information given out by the article, and means (18, 20, 21, 13) for the processing and transmission of these signals to the processing apparatus, this system being characterised in that the liquid crystal device is constituted by a screen (6) for the display of alphanumeric information, which screen is associated with control means (8,9) provided for selectively commanding on the one hand the display of alphanumeric characters on a plurality of areas of the screen in conformity with alphanumeric information computed in the article and on the other hand the binary modulation of the reflectance of at least one area of this screen for the transmission, to the reader, of binary information computed in the article.

2. System according to Claim 1, characterised in that the liquid crystal screen (6) of the article (1) comprises a plurality of areas (16) each commanded by the means for modulating the reflectance of this area as a function of alphanumeric information to be displayed or of binary information to be transmitted to the processing equipment, the reader then comprising one or more light sources (15) arranged to illuminate the said regions of the screen and sensors (17) which are each sensitive to that fraction of the light which is reflected by one of the illuminated areas, in such a manner as to ensure a transmission in parallel of binary information between the article and the processing apparatus.

3. System according to either one of Claims 1 and 2, characterised in that the reader further comprises optical means (23) for commanding operations preparatory to a transfer of information from the article to the reader, these means being constituted by at least one light source $(23_1, 23_2)$ modulated as a function of command information emitted by the reader, the article comprising at least one photosensitive component (22) placed opposite this source in order to deliver a signal to means (8) for processing information forming part of the article, which means are capable of preparing and executing the transfer of information.

4. System according to any one of Claims 1 to 3, characterised in that the reader further comprises means (20) for processing the information received from the article and a detector (46) sensitive to the presence of the article (1) in the receiving station (3) to pass to these processing means a signal representative of such presence with a view to the organisation of a transfer of information from the article (1) to the reader (2).

5. System according to Claim 4, characterised in that the reader comprises a comparator (47) for comparing the output signal of a photosensitive sensor (17) with a reference signal and means (R1, R2, 48, 51) for adjusting this reference signal as a function of at least one reflectance level of an area of the screen (6) of the article placed in the receiving station, in preparation for a transfer of information, this reflectance level being representative of one of two states of a logic information to be transmitted optically during this transfer.

6. System according to Claim 5, characterised in that the reader comprises (49) for activating the said adjustment means (R1, R2, 48, 51) while the article is placed in the reader, immediately before each transfer of information and while the liquid crystal display screen (6) is energised.

7. System according to any one of Claims 4 to 6, characterised in that the reader comprises a strip (28) containing a row of light sources (15) and a row of photosensitive receivers (17) arranged to be placed opposite the screen (6) of the article (1) inserted in the receiving station (3) and to read the modulations of reflectance of an equal number of areas (16) of this screen.

8. System according to Claim 7, characterised in that the angle β of the axis of a light source (15) in relation to the normal to the illuminated area (16) of the screen (6) is greater than or equal to the angle α of the axis of the photosensitive sensor in relation to this same normal.

9. System according to Claim 8, characterised in that the angle α is less than approximately 20°.

10. System according to any one of Claims 5 to 9, characterised in that it comprises a printer (52) commanded by the information processing means (20) for issuing on a hard-copy medium information relating to a transmission of information, which transmission is executed by the system.

11. System according to any of Claims 5 to 10, characterised in that the processing equipment is a centralised processing equipment for this information, which equipment is remote from the reader.

12. System according to any one of Claims 5 to 11, characterised in that the reader takes the form of a terminal installed at a location accessible to the public.

13. Article as specified in any one of Claims 1 to 3.

14. Article according to Claim 13, in which each area of the liquid crystal device is divided into segments which can individually be opacified, characterised in that the control means (8, 9) for modulating the reflectance of the area command the simultaneous clearing or opacification of all the segments of the area to transmit to the reader a first or a second state of an information in binary logic.

15. Article according to Claim 13 or 14, characterised in that it comprises photosensitive means (22) arranged to receive optical signals from the reader, to command a preparation of the system for a transmission of information.

16. Article according to any one of Claims 13 to 15, characterised in that it is portable.

FIG.:1

FIG.:2

FIG.:3

FIG.:4

FIG.:5